(19) Europäisches Patentamt
European Patent Office
Office européen des brevets

(11) EP 3 305 732 A1

# (12) EUROPEAN PATENT APPLICATION
published in accordance with Art. 153(4) EPC

(43) Date of publication:
**11.04.2018 Bulletin 2018/15**

(21) Application number: **16800092.5**

(22) Date of filing: **26.05.2016**

(51) Int Cl.:
***C02F 1/56*** *(2006.01)* ***B01D 21/01*** *(2006.01)*
***C02F 3/32*** *(2006.01)*

(86) International application number:
**PCT/JP2016/065576**

(87) International publication number:
**WO 2016/190388 (01.12.2016 Gazette 2016/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.05.2015 JP 2015107637**

(71) Applicant: **Mitsubishi Chemical Corporation**
**Tokyo 100-8251 (JP)**

(72) Inventors:
- **GOTOU, Hisanori**
  **Tokyo 100-8251 (JP)**
- **KOBAYASHI, Takayuki**
  **Tokyo 100-8251 (JP)**
- **TASAKI, Ken**
  **Tokyo 100-8251 (JP)**
- **TATSUMI, Toshiyuki**
  **Tokyo 100-0005 (JP)**

(74) Representative: **Hoffmann Eitle**
**Patent- und Rechtsanwälte PartmbB**
**Arabellastraße 30**
**81925 München (DE)**

## (54) WASTEWATER TREATMENT METHOD

(57) Provided is a method of treating wastewater, which can treat wastewater, particularly organic wastewater while saving labor and decreasing the environmental impact by improving deterioration in the purification performance due to clogging of the filter bed, which is regarded as a problem when purifying wastewater, particularly organic wastewater having high SS concentration, BOD, and COD by a constructed wetland and by decreasing increases in the area and the number of stages of wetland required due to an increase in the BOD and COD load. A method of treating wastewater provided comprises: an aggregate floc forming step of forming an aggregate floc by adding a polymer flocculant to wastewater; a solid-liquid separation step of obtaining separated water by solid-liquid separation of the aggregate floc; and a purification step of purifying the separated water by using a constructed wetland.

EP 3 305 732 A1

**Description**

TECHNICAL FIELD

The present invention relates to a method of treating wastewater, particularly organic wastewater.

This application is based upon and claims the benefit of priority of the prior Japanese Patent Application No. 2015-107637 filed in Japan on May 27, 2015, the entire contents of which are incorporated herein by reference.

BACKGROUND ART

An activated sludge method is mentioned as a method of treating wastewater, particularly a treatment method for purifying organic wastewater. The activated sludge method is a method in which aeration is conducted and aerobic microorganisms decompose the pollutants. High quality treated water is obtained by properly controlling the pollutant concentration and the aeration volume, and the activated sludge method is widely utilized in the purification treatment of organic wastewater of sewage and organic wastewater discharged from factories.

However, the fluctuations of load are severe in the treatment of livestock-based organic wastewater containing a large amount of excreta and organic wastewater discharged from large scale factories. Hence, the running conditions for normal operation are complicated, maintenance is difficult, or tremendous labor is required. In addition, it is regarded as a problem that it takes a long time for the treatment since BOD and COD are high in most livestock-based organic wastewaters and the running cost and the construction cost increase by an increase in the volume of aeration tank.

As a method of treating wastewater other than the activated sludge method, particularly as a treatment method for purifying organic wastewater, a treatment method is mentioned in which organic wastewater is allowed to flow into a constructed wetland and the wastewater is purified by the purification effect of the microorganisms and aquatic plants in the wetland. Constructed wetlands are artificially created wetlands for wastewater treatment and isolated from the outside world by a waterproof sheet and the like so that the wastewater does not leak out of the wetlands. In addition, media such as gravel and pebbles, water surface gradient, the adjustment of flow rate of wastewater by the installation of inflow pipe and outflow pipe, and the like can be easily controlled in constructed wetlands, and the constructed wetlands thus exhibit superior decontamination capacity per unit area to natural wetlands.

Constructed wetlands include surface flow type constructed wetlands in which water flows through the surface of the wetland and underground flow type constructed wetlands in which water flows through the interior of the wetland. The underground flow type constructed wetlands have an advantage that the decontamination capacity per unit area is higher than that of the surface flow type since the filtration effect by filter medium such as gravel packed in the wetland as a filter bed is obtained. Hence, the underground flow type constructed wetlands are being widely used all over the world including Europe as a purification treatment method which decreases the environmental impact and saves labor as compared to the activated sludge method.

Underground flow type constructed wetlands include a vertical type (hereinafter referred to as "vertical flow") to conduct aerobic purification treatment and a horizontal type (hereinafter referred to as "horizontal flow") to conduct anaerobic purification treatment. In recent years, underground flow type constructed wetlands in which vertical flow and horizontal flow are combined have been developed and put to practical use as a purification treatment method combined with the denitrification effect by anaerobic purification in horizontal flow wetlands. In addition, underground flow type constructed wetlands in which vertical flow wetlands are connected have also been developed and have been widely used as a purification treatment method to avoid clogging of the filter bed due to circulation of organic wastewater.

Moreover, an underground flow type constructed wetland system has been proposed which is equipped with a first underground flow type vertical flow wetland, a second underground flow type vertical flow wetland, and an underground flow type horizontal flow wetland so that the organic wastewater is sequentially circulated and in which aerobic purification is conducted in the first and second underground flow type vertical flow wetlands and anaerobic purification is conducted in the underground flow type horizontal flow wetland (Patent Literature 1).

However, the concentration range of organic wastewater applied is limited in all of these purification treatment methods by constructed wetlands and it is difficult to apply these methods to organic wastewater having a high concentration. Particularly in organic wastewater having a high content of suspended solids (hereinafter referred to as "SS"), clogging of the filter bed occurs when the wastewater is circulated and there is a risk that the purification performance of the wetland deteriorates and the entire facility cannot be operated even in the underground flow type constructed wetlands in which vertical flow wetlands are connected.

In addition, in the case of organic wastewater having high BOD and COD, the load of the constructed wetland increases and an extensive area is thus required for the entire facility by increases in the area and the number of stages of the wetland required. Hence, a problem arises that the place and region in which facilities of constructed wetlands can be installed are limited.

Examples of organic wastewater having high SS concentration, BOD, and COD may include livestock-based

excreta wastewater (hereinafter referred to as "livestock excreta wastewater"). In recent years, the regulation on the disposal of excreta has become severe, and it is concerned that the disposal cost of livestock excreta will increase. In addition, it is regarded as a problem that the burden per worker increases as the area of the disposal facility expands and the number of employees decreases by the intensification of management by livestock producers, and the retrenchment of labor for wastewater treatment is a very important task. Hence, it is strongly required to expand the application range of a treatment method which decreases the environmental impact and saves labor such as a purification treatment method by underground flow type constructed wetlands to organic wastewater having high SS concentration, BOD, and COD.

Meanwhile, examples of the treatment method for removing the solids in organic wastewater may include a method in which the solids in organic wastewater are flocculated and separated by using an inorganic coagulant and a polymer flocculant. For example, as a method of flocculating and separating livestock excreta wastewater of organic wastewater, a method has been proposed in which the livestock excreta wastewater is subjected to a deodorization treatment and a reforming treatment using one or more kinds of inorganic oxidizing agents selected from the group of oxidizing agents of a chlorite, a hypochlorite, a bromate, a bromite, a hypobromite, and hydrogen peroxide, a polymer flocculant composed of a cationic polymer and/or an amphoteric polymer is then added to the resultant livestock excreta wastewater for the flocculation treatment, and the solid-liquid separation of the flocs is then conducted by a dehydration treatment using a dehydrator (Patent Literature 2).

However, it is difficult to decrease BOD and COD and to remove total nitrogen and total phosphorus although SS in the organic wastewater is removed by the above method. Furthermore, in organic wastewater having high SS concentration, BOD, and COD, there is a problem that the amounts of inorganic oxidizing agent and polymer flocculant required to be added increase and SS and BOD in the separated water after treatment hardly decrease. Hence, it is a current situation that the separated water after treatment using an inorganic coagulant or a polymer flocculant is generally purified by the activated sludge method and tremendous labor and treatment cost are required.

CITATION LIST

PATENT LITERATURE

Patent Literature 1: JP 2008-068211 A
Patent Literature 2: JP 2010-179248 A

SUMMARY OF THE INVENTION

PROBLEM TO BE SOLVED BY THE INVENTION

An object of the invention is to provide a method of treating wastewater, which can treat wastewater, particularly organic wastewater while saving labor and decreasing the environmental impact by improving deterioration in the purification performance due to clogging of the filter bed, which is regarded as a problem when purifying wastewater, particularly organic wastewater having high SS concentration, BOD, and COD by a constructed wetland and by decreasing increases in the area and the number of stages of wetland required due to an increase in the BOD and COD load.

MEANS FOR SOLVING PROBLEM

As a result of intensive investigations to solve the above-mentioned problems, the present inventors have found out a method which has not been known so far and in which the separated water obtained after the flocculation and separation treatment using a polymer flocculant is applied to the purification treatment by a constructed wetland, thereby completing the invention. In other words, the invention has the following aspects.

[1] A method of treating wastewater, the method including an aggregate floc forming step of forming an aggregate floc by adding a polymer flocculant to wastewater, a solid-liquid separation step of obtaining separated water by solid-liquid separation of the aggregate floc, and a purification step of purifying the separated water by using a constructed wetland.
[2] The method of treating wastewater according to [1], in which suspended solids in wastewater to which a polymer flocculant is added in the aggregate floc forming step is from 6000 to 100000 mg/L with respect to a total amount of the wastewater.
[3] The method of treating wastewater according to [1] or [2], in which a content of total phosphorus in wastewater

to which a polymer flocculant is added in the aggregate floc forming step is from 10 to 10000 mg/L with respect to a total amount of the wastewater.

[4] The method of treating wastewater according to any one of [1] to [3], in which the polymer flocculant includes one or more kinds of polymer flocculants selected from the group consisting of an amidine-based cationic polymer (A), an amphoteric polymer (B), and a non-amidine-based cationic polymer (C).

[5] The method of treating wastewater according to [4], in which the polymer flocculant includes an amidine-based cationic polymer (A).

[6] The method of treating wastewater according to [5], in which an amount of the polymer flocculant added to the wastewater is from 100 to 3000 ppm by mass with respect to a mass of the wastewater.

[7] The method of treating wastewater according to [4], in which the polymer flocculant includes an amphoteric polymer (B).

[8] The method of treating wastewater according to [7], in which an amount of the polymer flocculant added to the wastewater is from 100 to 2000 ppm by mass with respect to a mass of the wastewater.

[9] The method of treating wastewater according to [4], in which the polymer flocculant includes a non-amidine-based cationic polymer (C).

[10] The method of treating wastewater according to [9], in which an amount of the polymer flocculant added to the wastewater is from 100 to 2000 ppm by mass with respect to a mass of the wastewater.

[11] The method of treating wastewater according to [5], in which the amidine-based cationic polymer (A) is a polymer containing an amidine constitutional unit represented by either of a general formula (1) or a general formula (2):

[Chem. 1]

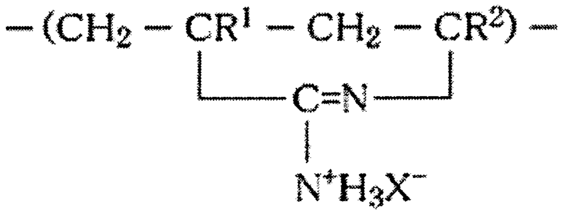

General formula (1)

(where, $R^1$ and $R^2$ are each independently a hydrogen atom or a methyl group and $X^-$ is an anion),

[Chem. 2]

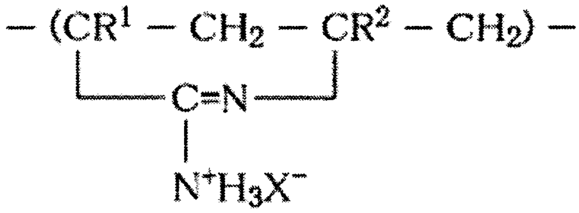

General formula (2)

(where, $R^1$ and $R^2$ are each independently a hydrogen atom or a methyl group and $X^-$ is an anion).

[12] The method of treating wastewater according to [7], in which the amphoteric polymer (B) is a polymer containing an anionic constitutional unit, a nonionic constitutional unit, and a cationic constitutional unit represented by a general formula (3):

[Chem. 3]

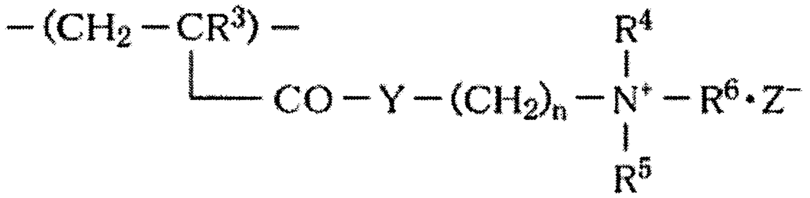

General formula (3)

(where, $R^3$ is a hydrogen atom or a methyl group, $R^4$ and $R^5$ are each independently a hydrogen atom or an alkyl group having from 1 to 4 carbon atoms, $R^6$ is an alkyl group having from 1 to 4 carbon atoms or a benzyl group, Y is an oxygen atom or NH, $Z^-$ is an anion, and n is an integer from 1 to 3).

[13] The method of treating wastewater according to [9], in which the non-amidine-based cationic polymer (C) is a polymer containing a cationic constitutional unit represented by a general formula (4):

[Chem. 4]

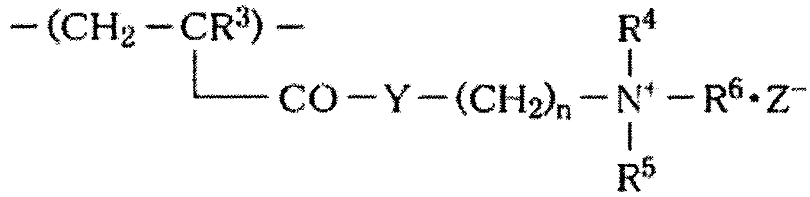

General formula (4)

(where, $R^3$ is a hydrogen atom or a methyl group, $R^4$ and $R^5$ are each independently a hydrogen atom or an alkyl group having from 1 to 4 carbon atoms, $R^6$ is an alkyl group having from 1 to 4 carbon atoms or a benzyl group, Y is an oxygen atom or NH, $Z^-$ is an anion, and n is an integer from 1 to 3).

[14] The method of treating wastewater according to any one of [1] to [13], in which a colloid value in the separated water is from -2.00 to 0.50 meq/L.

[15] The method of treating wastewater according to any one of [1] to [14], in which the constructed wetland includes at least either of a vertical flow wetland or a horizontal flow wetland.

[16] The method of treating wastewater according to any one of [1] to [15], in which a value (COD (Mn) in wastewater/COD (Mn) at outlet of final wetland) obtained by dividing a value of COD (Mn) in the wastewater by a value of COD (Mn) in treated water at an outlet of a final wetland located at a most downstream side is from 8 to 10000.

EFFECT OF THE INVENTION

According to the method of treating wastewater of the invention, in the purification treatment of wastewater, particularly organic wastewater by a constructed wetland, a polymer flocculant is added to wastewater to form aggregate flocs and separated water is obtained by solid-liquid separation of the aggregate flocs in advance before the wastewater is allowed to flow into the constructed wetland and the separated water thus obtained can be thus purified without adversely affecting the microbial and bacterial flora and aquatic plants in the constructed wetland. This decreases the load of the purification treatment by the constructed wetland and greatly decreases BOD, COD, total nitrogen, and total phosphorus in the treated water, and high quality treated water is thus obtained. In addition, according to the method of treating wastewater of the invention, it is possible to increase the application range of the purification treatment of wastewater, particularly organic wastewater having high SS, BOD, and COD by a constructed wetland and to greatly cut down the treatment cost by decreases in the number of stages and the area of the constructed wetland required.

MODE(S) FOR CARRYING OUT THE INVENTION

Hereinafter, a method of treating wastewater according to the invention will be described. The following embodiments are merely examples for explaining the invention, and it is not intended to limit the invention only to the embodiments. The invention can be implemented in various forms without departing from the gist thereof.

The method of treating wastewater of the invention is a method of decreasing BOD and COD and removing total nitrogen, total phosphorus, and the like from wastewater, particularly organic wastewater, and it includes the following steps.

(1) An aggregate floc forming step of forming an aggregate floc by adding a polymer flocculant to wastewater;
(2) a solid-liquid separation step of obtaining separated water by solid-liquid separation of the aggregate floc; and
(3) a purification step of purifying the separated water by using a constructed wetland.

<Aggregate Flock Forming Step>

This step is a step of forming an aggregate floc by adding a polymer flocculant to wastewater.

The "flocculant" means a chemical agent having a function of flocculating water-soluble and water-insoluble pollutants and the like contained in wastewater to form fine flocs and aggregate flocs.

The "fine floc" means a fine assembly formed as target substances which increase the values of negatively charged BOD and COD are insolubilized by charge neutralization and flocculated and may include a fine assembly formed as water-insoluble particles such as suspended solids and colloidal substances are charge-neutralized and flocculated in addition to this.

The "aggregate floc" means one formed as the fine flocs are further flocculated and coarsened to the flock size required for flocculation and separation.

(Wastewater)

The wastewater to be treated by the method of treating wastewater of the invention is preferably organic wastewater. Examples of the organic wastewater may include livestock excreta wastewater generated from livestock production facilities and digested wastewater obtained by subjecting wastewater containing excreta to the methane fermentation treatment. Specific examples thereof may include dairy wastewater generated from the disposing facilities of the dairy industry and swine excreta wastewater generated from the disposing facilities of the swine industry. Examples thereof may further include wastewater such as general daily sewage and sewage containing human excreta, and wastewater generated from beverage factories and food factories, wastewater generated from chemical factories (dyeing, resins, fibers, chemical products), and wastewater generated from various factory facilities. The organic substances contained in the organic wastewater are water-soluble and water-insoluble organic substances, and as an indicator of the content of organic substances, it is possible to use the values of BOD, COD, and VTS and further the SS concentration. The wastewater to be treated by the method of treating wastewater of the invention may further contain suspended solids, colloidal substances, ionic components, and the like. Here, the "ionic component" means a viscous anionic or amphoteric organic polymer component contained in wastewater and an anionic component derived from an inorganic salt.

The "BOD" means pollution by water-soluble and water-insoluble organic substances contained in wastewater. In the invention, the value of BOD means a value measured in conformity to the BOD analysis method described in JIS K 0102: 21 and 32.3. The BOD in the wastewater to which a polymer flocculant is added in the aggregate floc forming step to be described later is preferably 4000 mg/L or more, more preferably 7000 mg/L or more, still more preferably 10000 mg/L or more, and particularly preferably 20000 mg/L or more. In addition, the BOD is preferably 100000 mg/L or less and more preferably 80000 mg/L or less. When the BOD is within the above range, it is possible to obtain more favorable effect of decreasing the BOD and COD load and to obtain high quality treated water in the purification treatment of separated water by a constructed wetland.

For example, the BOD in the wastewater to which a polymer flocculant is added in the aggregate floc forming step is preferably from 4000 to 100000 mg/L, more preferably from 7000 to 80000 mg/L, still more preferably from 10000 to 80000 mg/L, and particularly preferably from 20000 to 80000 mg/L.

The "COD" means pollution by water-soluble and water-insoluble organic substances contained in wastewater. In the invention, COD is used as a substitute value of BOD. In the invention, the value of COD means a value measured in conformity to the COD (Mn) analysis method described in JIS K 0102: 17. The COD in the wastewater to which a polymer flocculant is added in the aggregate floc forming step to be described later is preferably 4000 mg/L or more, more preferably 7000 mg/L or more, still more preferably 10000 mg/L or more, and particularly preferably 20000 mg/L or more. In addition, the COD is preferably 100000 mg/L or less and more preferably 80000 mg/L or less. When the

COD is within the above range, it is possible to obtain more favorable effect of decreasing the BOD and COD load and to obtain high quality treated water in the purification treatment of separated water by a constructed wetland.

For example, the COD in the wastewater to which a polymer flocculant is added in the aggregate floc forming step is preferably from 4000 to 100000 mg/L, more preferably from 7000 to 80000 mg/L, still more preferably from 10000 to 80000 mg/L, and particularly preferably from 20000 to 80000 mg/L.

The "VTS" means organic substances contained in wastewater, and the value of VTS means a value that is specifically measured by the following procedure.

(1) 100 ml of wastewater is dried at 105°C for 6 hours and the amount of residue (total solid amount) (g) is weighed.
(2) The residue is then heated at 600°C for 2 hours and the amount of residue after ashing (amount of incineration) (g) is weighed.
(3) The volatile solids (VTS; %/solids) are determined by the following formula (A).

$$\text{VTS (\%/solids)} = \{(\text{total solid amount - amount of incineration})/\text{total solid amount}\} \times 100 \cdots \text{(A)}$$

The VST in the wastewater to which a polymer flocculant is added in the aggregate floc forming step to be described later is preferably 40%/solids or more, more preferably 50%/solids or more, and still more preferably 60%/solids or more. In addition, the VTS is preferably 100%/solids or less. When the VTS is within the above range, it is possible to form favorable aggregate flocs by the flocculation treatment of wastewater, particularly organic wastewater and to efficiently conduct solid-liquid separation of the aggregate flocs.

For example, the VST in the wastewater to which a polymer flocculant is added in the aggregate floc forming step is preferably from 40 to 100%/solids, more preferably from 50 to 100%/solids, and still more preferably from 60 to 100%/solids.

The "SS" is suspended solids contained in wastewater and means substances remaining on the filtering medium when organic wastewater is filtered through a filter medium having a pore size of 1 μm according to JIS K 0102: 2008. In addition, the "SS concentration" means a value measured by using a glass fiber paper filter having a pore size of 1 μm as a filter medium in conformity to the measuring method described in JIS K 0102: 2008. The SS concentration in the wastewater to which a polymer flocculant is added in the aggregate floc forming step to be described later is preferably 6000 mg/L or more, more preferably 10000 mg/L or more, and still more preferably 20000 mg/L or more. In addition, the SS concentration is preferably 100000 mg/L or less and more preferably 80000 mg/L or less. When the SS concentration is within the above range, it is possible to suppress clogging of the filter bed by organic wastewater having a high SS concentration and thus to treat the organic wastewater in a state of exhibiting stable purification performance in the purification treatment of separated water by a constructed wetland. Hence, the concentration range applied can be expanded to a higher concentration range in the SS concentration.

For example, the SS concentration in the wastewater to which a polymer flocculant is added in the aggregate floc forming step is preferably from 6000 to 100000 mg/L, more preferably from 10 000 to 80000 mg/L, and still more preferably from 20000 to 80000 mg/L with respect to the total amount of the wastewater.

The "total phosphorus" means all phosphorus components contained in wastewater. In the invention, the value of total phosphorus is a value measured in conformity to the potassium peroxodisulfate decomposition method and the molybdenum blue absorption spectrophotometry described in JIS K 0102: 46.3.1 and JIS K 0102: 46.1.1. The total phosphorus in the wastewater to which a polymer flocculant is added in the aggregate floc forming step to be described later is preferably 10 mg/L or more, more preferably 100 mg/L or more, and still more preferably 200 mg/L or more. In addition, the total phosphorus is preferably 10000 mg/L or less, more preferably 5000 mg/L or less, and still more preferably 1000 mg/L or less. When the total phosphorus is within the above range, it is possible to obtain a more favorable effect of decreasing the total phosphorus load and to obtain high quality treated water in the purification treatment of separated water by a constructed wetland.

For example, the total phosphorus in the wastewater to which a polymer flocculant is added in the aggregate floc forming step is preferably from 10 to 10000 mg/L, more preferably from 100 to 5000 mg/L, and still more preferably from 200 to 1000 mg/L.

(Polymer Flocculant)

In the method of treating wastewater of the invention, one or more kinds of polymer flocculants selected from the group consisting of an amidine-based cationic polymer (A), an amphoteric polymer (B), and a non-amidine-based cationic polymer (C) can be used as a polymer flocculant. As an embodiment, it is preferable to include an amidine-based cationic polymer (A) as a polymer flocculant. As another embodiment, it is preferable to include an amphoteric polymer (B) as a polymer flocculant. As still another embodiment, it is preferable to include a non-amidine-based cationic polymer (C) as a polymer flocculant.

• Amidine-Based Cationic Polymer (A)

The amidine-based cationic polymer (A) is a polymer containing an amidine constitutional unit represented by either of the general formula (1) or the general formula (2). The content of the amidine constitutional unit with respect to the entire constitutional units in the amidine-based cationic polymer (A) is preferably 30% by mole or more and more preferably 40% by mole or more with respect to the number of moles of the entire constitutional units of the amidine-based cationic polymer (A). In addition, the content is preferably 90% by mole or less and more preferably 80% by mole or less. When the content is within the above range, target substances which increase the values of SS, BOD, and COD are efficiently flocculated by the flocculation treatment of wastewater, particularly organic wastewater, and it is possible to obtain a favorable effect of decreasing BOD and COD and to obtain high quality treated water in the purification treatment of separated water by a constructed wetland.

For example, the content of the amidine constitutional unit with respect to the entire constitutional units in the amidine-based cationic polymer (A) is preferably from 30 to 90% by mole and more preferably from 40 to 80% by mole with respect to the number of moles of the entire constitutional units of the amidine-based cationic polymer (A).

In the invention, the "constitutional unit" means a structural unit derived from a monomer molecule formed by polymerization of a monomer or a structural unit composed of structural units derived from two or more monomer molecules in which pendant groups are linked to each other by a reaction between a pendant group of a structural unit derived from a monomer molecule and a pendant group of a structural unit derived from another monomer molecule. In addition, the "polymer" means a compound having a structure composed of a plurality of constitutional units.

Examples of the anion in the general formula (1) and the general formula (2) may include a chloride ion, a bromide ion, a sulfate ion, a hydrogen sulfate ion, a nitrate ion, and a hydrogen nitrate ion, a chloride ion and a bromide ion are preferable, and a chloride ion is particularly preferable.

A method of manufacturing the amidine-based cationic polymer (A) is not particularly limited, but a method in which a copolymer of an ethylenically unsaturated monomer having an amino group or a substitute amino group capable of forming an amino group by a conversion reaction with a nitrile such as acrylonitrile or methacrylonitrile is manufactured and a cyano group and an amino group in the copolymer are reacted with each other under an acidic condition to form an amidine.

As the ethylenically unsaturated monomer, a compound represented by $CH_2=CR^7-NHCOR^8$ (general formula (5): where $R^7$ is a hydrogen atom or a methyl group and $R^8$ is a hydrogen atom or an alkyl group having from 1 to 4 carbon atoms) is preferable. The acylamino group contained in the copolymer is easily converted into an amino group by hydrolysis or alcoholysis. Furthermore, this amino group reacts with the adjacent cyano group to form an amidine.

Specific examples of the compound represented by the general formula (5) may include N-vinylformamide ($R^7$ = H and $R^8$ = H) and N-vinylacetamide ($R^7$ = H and $R^8$ = $CH_3$). N-vinylformamide is particularly preferable.

The proportion of the ethylenically unsaturated monomer to the nitrile used in the copolymer is preferably from 20:80 to 80:20 and more preferably from 40:60 to 60:40 in terms of a molar ratio.

The amidine-based cationic polymer (A) having N-vinylformamide and acrylonitrile as constitutional units is most typically manufactured by forming an amidine constitutional unit from the amino group formed by copolymerizing N-vinylformamide with acrylonitrile, heating the copolymer thus formed in the presence of hydrochloric acid, and conducting hydrolysis of the copolymer and the adjacent cyano group according to the description above. At this time, amidine-based cationic polymers (A) having various kinds of compositions are obtained by appropriately selecting the molar ratio between N-vinylformamide and acrylonitrile to be subjected to copolymerization and the amidination conditions of the copolymer. Incidentally, the amidine-based cationic polymer (A) may be obtained from commercial products and used.

Incidentally, two or more kinds of amidine-based cationic polymers (A) can also be concurrently used as the amidine-based cationic polymer (A).

With regard to the amidine-based cationic polymer (A), a reduced viscosity (hereinafter referred to as "reduced viscosity") of a 1 mol/L aqueous solution of sodium chloride containing 0.1 g/dL of the amidine-based cationic polymer (A) at 25°C is preferably 0.1 dL/g or more and more preferably 1 dL/g or more. The reduced viscosity is preferably 10 dL/g or less and more preferably 5 dL/g or less.

For example, the reduced viscosity of the amidine-based cationic polymer (A) is preferably from 0.1 to 10 dL/g and more preferably from 1 to 5 dL/g.

• Amphoteric Polymer (B)

The amphoteric polymer (B) is a polymer containing a cationic constitutional unit represented by the general formula (3). The content of the cationic constitutional unit with respect to the entire constitutional units in the amphoteric polymer (B) is preferably 20% by mole or more with respect to the number of moles of the entire constitutional units of the amphoteric polymer (B). in addition, the content is preferably 80% by mole or less and more preferably 55% by mole or less. When the content is within the above range, it is possible to form favorable aggregate flocs by the flocculation treatment of wastewater, particularly organic wastewater and to efficiently conduct solid-liquid separation of the aggregate flocs.

For example, the content of the cationic constitutional unit with respect to the entire constitutional units in the amphoteric polymer (B) is preferably from 20 to 80% by mole and more preferably from 20 to 55% by mole with respect to the number of moles of the entire constitutional units of the amphoteric polymer (B).

Incidentally, examples of the anion in the general formula (3) may include a chloride ion, a bromide ion, a sulfate ion, a hydrogen sulfate ion, a nitrate ion, and a hydrogen nitrate ion, a chloride ion and a bromide ion are preferable, and a chloride ion is particularly preferable. In addition, $R^6$ in the general formula (3) is preferably an alkyl group having from 1 to 4 carbon atoms. In addition, examples of the alkyl group having from 1 to 4 carbon atoms in the general formula (3) may include a methyl group, an ethyl group, a propyl group, an isopropyl group, and a butyl group, a methyl group and an ethyl group are preferable, and a methyl group is particularly preferable.

Examples of the cationic constitutional unit may include a cationic constitutional unit derived from a mineral acid salt or alkyl chloride quaternary salt of a dialkylaminoalkyl (meth)acrylate which is a cationic monomer or a cationic constitutional unit derived from a mineral acid salt or alkyl chloride quaternary salt of a dialkylaminoalkyl (meth)acrylamide. Particularly, an alkyl chloride quaternary salt of a dialkylaminoalkyl (meth)acrylate is preferable. The cationic monomer may be used singly or two or more kinds thereof may be used concurrently.

Incidentally, in the present specification, the term "(meth)acrylate" is used as the general term for an acrylate and a methacrylate. In other words, the "(meth)acrylate" means either or both of an acrylate and a methacrylate. The same applies to (meth)acrylic acid, (meth)acrylamide, and the like.

The amphoteric polymer (B) also contains an anionic constitutional unit. Examples of the anionic constitutional unit may include (meth)acrylic acid and 2-acrylamido-2-methylpropanesulfonic acid. Acrylic acid is particularly preferable. The content of the anionic constitutional unit with respect to the entire constitutional units in the amphoteric polymer (B) is preferably 3% by mole or more and more preferably 5% by mole or more with respect to the number of moles of the entire constitutional units of the amphoteric polymer (B). In addition, the content is preferably 75% by mole or less and more preferably 30% by mole or less.

For example, the content of the anionic constitutional unit with respect to the entire constitutional units in the amphoteric polymer (B) is preferably from 3 to 75% by mole and more preferably from 5 to 30% by mole with respect to the number of moles of the entire constitutional units of the amphoteric polymer (B).

The amphoteric polymer (B) contains a nonionic constitutional unit in addition to the cationic constitutional unit and the anionic constitutional unit. Examples of the nonionic constitutional unit may include (meth)acrylamide. The content of the nonionic constitutional unit with respect to the entire constitutional units in the amphoteric polymer (B) is preferably from 1 to 80% by mole with respect to the number of moles of the entire constitutional units of the amphoteric polymer (B).

The method of manufacturing the amphoteric polymer (B) is not particularly limited, but it is possible to appropriately select a method such as an aqueous solution photopolymerization method in which an aqueous monomer solution prepared by dissolving the monomer in water is formed into a uniform sheet and copolymerized by being irradiated with visible light or ultraviolet light and using a photopolymerization initiator; an adiabatic polymerization method in which one or more kinds of initiators are added to an aqueous monomer solution and the aqueous monomer solution is polymerized to obtain a polymer in the form of an aqueous gel; a dispersion polymerization method in which an aqueous monomer solution is dispersed in a nonaqueous solvent and polymerized; or an emulsion polymerization method in which an aqueous monomer solution is emulsified by using an emulsifying agent in a nonaqueous solvent and polymerized. In the case of photopolymerization, adiabatic polymerization, and the like, the polymer is obtained as an aqueous gel, and it is thus preferable to pulverize and dry the aqueous gel to form the aqueous gel into a powder.

The reduced viscosity of the amphoteric polymer (B) is preferably 0.1 dL/g or more and more preferably 3.0 dL/g or more. In addition, the reduced viscosity is preferably 10.0 dL/g or less and more preferably 7.5 dL/g or less. When the reduced viscosity is within the above range, it is possible to form favorable aggregate flocs by the flocculation treatment of wastewater, particularly organic wastewater and to efficiently conduct solid-liquid separation of the aggregate flocs. In addition, in the purification treatment of separated water by a constructed wetland, an effect of preventing clogging of the filter bed is obtained, the purification performance of the constructed wetland is stabilized, the purification treatment can be efficiently conducted, and high quality treated water can be obtained.

For example, the reduced viscosity of the amphoteric polymer (B) is preferably from 0.1 to 10.0 dL/g and more

preferably from 3.0 to 7.5 dL/g.

The method of preparing the amphoteric polymer (B) having the reduced viscosity is not particularly limited, but it is possible to appropriately select the conditions such as the polymerization time, polymerization temperature, and the amount of chain transfer constructed used in the manufacturing process in consideration of the viscosity of the polymer to be manufactured. In the invention, it is preferable to adjust the reduced viscosity by the amount of chain transfer agent used. The kind of the chain transfer agent is not particularly limited, but examples thereof may include a thiol compound such as mercaptoethanol and mercaptopropionic acid and a reducing inorganic salt such as sodium sulfite, sodium hydrogen sulfite, or sodium hypophosphite. Among these, sodium hypophosphite is particularly preferable. The amount of chain transfer agent used is usually from 1 to 3000 ppm by mass with respect to the mass of the entire monomers of raw materials.

• Non-Amidine-Based Cationic Polymer (C)

The non-amidine-based cationic polymer (C) is a polymer containing a cationic constitutional unit represented by the general formula (4). The content of the cationic constitutional unit with respect to the entire constitutional units in the non-amidine-based cationic polymer (C) is preferably 10% by mole or more, more preferably 20% by mole or more, and still more preferably 40% by mole or more with respect to the number of moles of the entire constitutional units of the non-amidine-based cationic polymer (C). In addition, the content is preferably 100% by mole or less. When the content is within the above range, it is possible to form favorable aggregate flocs by the flocculation treatment of wastewater, particularly organic wastewater and to efficiently conduct solid-liquid separation of the aggregate flocs. In addition, in the purification treatment of separated water by a constructed wetland, an effect of preventing clogging of the filter bed is obtained, the purification performance of the constructed wetland is stabilized, the purification treatment can be efficiently conducted, and high quality treated water can be obtained.

For example, the content of the cationic constitutional unit with respect to the entire constitutional units in the non-amidine-based cationic polymer (C) is preferably from 10 to 100% by mole, more preferably from 20 to 100% by mole, and still more preferably from 40 to 100% by mole with respect to the number of moles of the entire constitutional units of the non-amidine-based cationic polymer (C).

Incidentally, examples of the anion in the general formula (4) may include a chloride ion, a bromide ion, a sulfate ion, a hydrogen sulfate ion, a nitrate ion, and a hydrogen nitrate ion, a chloride ion and a bromide ion are preferable, and a chloride ion is particularly preferable. In addition, $R^6$ in the general formula (4) is preferably an alkyl group having from 1 to 4 carbon atoms. In addition, examples of the alkyl group having from 1 to 4 carbon atoms in the general formula (4) may include a methyl group, an ethyl group, a propyl group, an isopropyl group, and a butyl group, and a methyl group and an ethyl group are preferable, and a methyl group is particularly preferable.

Examples of the cationic constitutional unit may include a cationic constitutional unit derived from a mineral acid salt or alkyl chloride quaternary salt of a dialkylaminoalkyl (meth)acrylate which is a cationic monomer or a cationic constitutional unit derived from a mineral acid salt or alkyl chloride quaternary salt of a dialkylaminoalkyl (meth)acrylamide. Particularly, an alkyl chloride quaternary salt of a dialkylaminoalkyl (meth)acrylate is preferable. The cationic monomer may be used singly or two or more kinds thereof may be used concurrently.

The non-amidine-based cationic polymer (C) may contain a nonionic constitutional unit in addition to the cationic constitutional unit. Examples of the nonionic constitutional unit may include (meth)acrylamide. In a case in which the non-amidine-based cationic polymer (C) contains a nonionic constitutional unit in addition to the cationic constitutional unit, the content of the nonionic constitutional unit with respect to the entire constitutional units in the non-amidine-based cationic polymer (C) is preferably from 1 to 90% by mole with respect to the number of moles of the entire constitutional units of the non-amidine-based cationic polymer (C).

The method of manufacturing the non-amidine-based cationic polymer (C) is not particularly limited, but it is possible to appropriately select the method such as the aqueous solution photopolymerization method, the adiabatic polymerization method, the dispersion polymerization method, or the emulsion polymerization method described above. In the case of photopolymerization, adiabatic polymerization, and the like, the polymer is obtained as an aqueous gel, and it is thus preferable to pulverize and dry the aqueous gel to form the aqueous gel into a powder.

• Another Polymer

The polymer flocculant to be used in the method of treating wastewater of the invention may contain a non-amidine-based cationic polymer or an amphoteric polymer other than the amidine-based cationic polymer (A), the amphoteric polymer (B), and the non-amidine-based cationic polymer (C) in a range in which the effect of the invention is not impaired. These polymers are preferably 0% by mass or more and less than 10% by mass, more preferably 0% by mass or more and less than 5% by mass, and still more preferably 0% by mass with respect to the total mass of the polymer flocculant.

• Anionic Polymer (D)

In the method of treating wastewater of the invention, in order to form more favorable aggregate flocs, an anionic polymer (D) may be further added after the addition of the polymer flocculant in the aggregate floc forming step. Incidentally, the step of further adding the anionic polymer (D) after the addition of the polymer flocculant in the aggregate floc forming step is also referred to as the "anionic polymer (D) adding step".

The anionic polymer (D) is a polymer containing an anionic constitutional unit. Examples of the anionic constitutional unit may include (meth)acrylic acid and 2-acrylamido-2-methylpropanesulfonic acid. Acrylic acid is particularly preferable. The content of the anionic constitutional unit with respect to the entire constitutional units in the anionic polymer (D) is preferably from 5 to 90% by mole with respect to the number of moles of the entire constitutional units of the anionic polymer (D).

The anionic polymer (D) may contain a nonionic constitutional unit. Examples of the nonionic constitutional unit may include (meth)acrylamide. The content of the nonionic constitutional unit with respect to the entire constitutional units in the anionic polymer (D) is preferably from 10 to 95% by mole with respect to the number of moles of the entire constitutional units of the anionic polymer (D).

The method of manufacturing the anionic polymer (D) is not particularly limited, and examples thereof may include a precipitation polymerization method, a bulk polymerization method, a dispersion polymerization method, and an aqueous solution polymerization method.

In the invention, as the method of adding the polymer flocculant to the wastewater and the method of forming the aggregate flocs, known methods can be employed.

As the method of adding the polymer flocculant, it is preferable to dissolve the polymer flocculant in water at a concentration of from 0.05 to 0.5% by mass and then to add the solution to the wastewater. In addition, in a case in which the polymer flocculant is composed of two or more kinds of polymers of the amidine-based cationic polymer (A), the amphoteric polymer (B), and the non-amidine-based cationic polymer (C), it is preferable to add the polymer flocculant as a one-part type chemical agent prepared by mixing the respective polymers together. In some cases, the powdery polymer flocculant may be added to the wastewater as it is.

It is preferable to stir the wastewater when the polymer flocculant is added. The polymer flocculant is not uniformly mixed when the wastewater is too weakly stirred, and the fine flocs are less likely to grow into aggregate flocs when the wastewater is too strongly stirred. Hence, it is preferable to stir the wastewater at a revolution number of 180 to 3000 rpm when the polymer flocculant is added. In addition, the stirring time depends on the amount of wastewater to be treated, but it is preferably 30 seconds or longer. In addition, the stirring time is preferably 300 seconds or shorter and more preferably 120 seconds or shorter. For example, the stirring time is preferably from 30 to 300 seconds and more preferably from 30 to 120 seconds.

In a case in which the polymer flocculant does not contain the amidine-based cationic polymer (A) and the anionic polymer (D) is further added after the addition of the polymer flocculant, the amount of the anionic polymer (D) to be further added after the addition of the polymer flocculant varies depending on the SS concentration, the concentrations or contents of suspended solids, colloidal substances, ionic components, and the like, BOD, COD, VTS, and total phosphorus in the wastewater to which the anionic polymer (D) is added, but it can be selected within a range in which the unreacted polymer flocculant does not excessively remain in the wastewater after the aggregate floc forming step. As a rough guideline, the amount of the anionic polymer (D) is an amount to be from 1 to 2000 ppm by mass with respect to the mass of the wastewater (not including the mass of the polymer flocculant added).

The amounts of the polymer flocculant and the anionic polymer (D) to be further added after the addition of the polymer flocculant added to the wastewater are respectively preferably 1 ppm or more, more preferably 10 ppm or more, and still more preferably 300 ppm or more with respect to the mass of the wastewater (not including the mass of the polymer flocculant added) to which the polymer flocculant and the anionic polymer (D) are added. The amounts thereof are respectively preferably 2000 ppm or less and more preferably 1000 ppm or less. When the amounts are within the above ranges, it is possible to form favorable aggregate flocs by the flocculation treatment of wastewater, particularly organic wastewater and to efficiently conduct solid-liquid separation of the aggregate flocs. In addition, when the amounts are within the above ranges, it is possible to purify the separated water obtained without adversely affecting the microbial and bacterial flora and aquatic plants in the constructed wetland.

For example, the amounts of the polymer flocculant and the anionic polymer (D) to be further added after the addition of the polymer flocculant added to the wastewater are respectively preferably from 1 to 2000 ppm by mass, more preferably from 10 to 1000 ppm by mass, and still more preferably from 300 to 1000 ppm by mass with respect to the mass of the wastewater (not including the mass of the polymer flocculant added) to which the polymer flocculant and the anionic polymer (D) are added.

It is preferable that the polymer flocculant contains the amidine-based cationic polymer (A) since the amidine-based cationic polymer (A) has a high cation density in the pure unit polymer and exhibits excellent performance in the action of charge neutralization. As the polymer flocculant contains the amidine-based cationic polymer (A), negatively

charged pollutants contained in the wastewater are insolubilized by charge neutralization, ionic components, suspended solids, colloidal substances, and the like other than the negatively charged pollutants are charge-neutralized at the same time, and fine flocs can be efficiently formed. Furthermore, the action of crosslinking and adsorption is improved, the fine flocs are efficiently enlarged, and more favorable aggregate flocs can be formed.

In addition, the ionic components, suspended solids, colloidal substances, and the like other than the negatively charged pollutants contained in the wastewater are mostly viscous and exhibit properties of adsorbing onto the filter bed in the constructed wetland and hindering the passage of separated water in the filter bed. The amidine-based cationic polymer (A) decreases the viscosity thereof by efficiently charge-neutralizing and insolubilizing these, and it is thus possible to improve the permeability of separated water in the filter bed. Furthermore, in a case in which the amount of the polymer flocculant added is large, the charge neutralization reaction of ionic components, suspended solids, colloidal substances, and the like further proceeds, and thus the polymer flocculant is hardly in an unreacted state and the unreacted polymer flocculant hardly excessively remain in the separated water. Hence, it is possible to purify the separated water obtained without adversely affecting the microbial and bacterial flora and the aquatic plants in the constructed wetland.

In a case in which the polymer flocculant contains the amidine-based cationic polymer (A) and the anionic polymer (D) is further added after the addition of the polymer flocculant, the amount of the anionic polymer (D) to be further added after the addition of the polymer flocculant varies depending on the SS concentration, the concentrations or contents of suspended solids, colloidal substances, ionic components, and the like, BOD, COD, VTS, and total phosphorus in the wastewater to which the anionic polymer (D) is added, but it can be selected within a range in which the unreacted polymer flocculant does not excessively remain in the wastewater after the aggregate floc forming step. As a rough guideline, the amount of the anionic polymer (D) is an amount to be from 1 to 3000 ppm by mass with respect to the mass of the wastewater (not including the mass of the polymer flocculant added).

The amounts of the polymer flocculant and the anionic polymer (D) to be further added after the addition of the polymer flocculant added to the wastewater are respectively preferably 1 ppm or more, more preferably 10 ppm or more, and still more preferably 300 ppm or more with respect to the mass of the wastewater (not including the mass of the polymer flocculant added) to which the polymer flocculant and the anionic polymer (D) are added. The amounts thereof are respectively preferably 3000 ppm or less, more preferably 2500 ppm or less, and still more preferably 2000 ppm or less. When the amounts are within the above ranges, it is possible to form favorable aggregate flocs by the flocculation treatment of wastewater, particularly organic wastewater and to efficiently conduct solid-liquid separation of the aggregate flocs. In addition, when the amounts are within the above ranges, it is possible to purify the separated water obtained without adversely affecting the microbial and bacterial flora and aquatic plants in the constructed wetland.

For example, the amounts of the polymer flocculant and the anionic polymer (D) to be further added after the addition of the polymer flocculant added to the wastewater are respectively preferably from 1 to 3000 ppm by mass, more preferably from 10 to 2500 ppm by mass, and still more preferably from 300 to 2000 ppm by mass with respect to the mass of the wastewater (not including the mass of the polymer flocculant added) to which the polymer flocculant and the anionic polymer (D) are added.

(Acidic Substance)

In order to improve the solubility of the polymer flocculant in water and to prevent degradation such as a decrease in viscosity of an aqueous solution of the polymer flocculant, an acidic substance may be added to water when the polymer flocculant is dissolved in water.

Examples of the acidic substance may include sulfamic acid and acidic sodium sulfite.

It is possible to appropriately determine the addition conditions such as the amount of acidic substance added and the timing of addition depending on the purpose of addition and the kind of acidic substance to be added.

(Coagulant)

In addition to the polymer flocculant, an inorganic coagulant and/or an organic coagulant (hereinafter collectively referred to as the "coagulant") may be added to the wastewater. The polymer flocculant to be used in the method of treating wastewater of the invention can sufficiently exert the effect of decreasing the pollutants in the wastewater even when being concurrently used with a coagulant.

Examples of the inorganic coagulant may include a sulfate band, polyaluminum chloride, ferric chloride, ferrous sulfate, ferric sulfate, and poly iron (polysulfate iron, polychlorinated iron). Examples of the organic coagulant may include polyamine, polydiallyldimethylammonium chloride, an alkyl chloride quaternary salt of a polydialkylaminoalkyl methacrylate, and a cationic surfactant.

It is possible to appropriately determine the addition conditions such as the amount of coagulant to be added and the timing of addition depending on the purpose of addition and the kind of coagulant to be added. The amount of

the coagulant added is preferably from 5 to 3000 parts by mass with respect to 100 parts by mass of the polymer flocculant, and as the timing of adding the coagulant to the wastewater, it is preferable to add the coagulant to the wastewater before adding the polymer flocculant to the wastewater.

<Solid-Liquid Separation Step>

This step is a step of obtaining separated water by subjecting the aggregate flocs obtained in the previous step to solid-liquid separation.

The "separated water" means a separated liquid portion obtained by subjecting the aggregate flocs obtained in the aggregate floc forming step to solid-liquid separation in the solid-liquid separation step. In particular, it is possible to decrease at least any one of SS, BOD, COD, total nitrogen, or total phosphorus in the wastewater by treating the wastewater in the aggregate floc forming step and the subsequent solid-liquid separation step and thus obtaining separated water. The SS concentration in the separated water obtained in the solid-liquid separation step in the method of treating wastewater of the invention is preferably as small as possible, and for example, the SS concentration is 1 mg/L or more with respect to the total amount of separated water, and it may be 10 mg/L or more. In addition, the SS concentration is preferably 5000 mg/L or less, more preferably 3000 mg/L or less, and still more preferably 1000 mg/L or less. When the SS concentration is within the above range, it is possible to suppress clogging of the filter bed by organic wastewater having a high SS concentration and thus to treat the organic wastewater in a state of exhibiting stable purification performance in the purification treatment of separated water by a constructed wetland. Hence, the concentration range applied can be expanded to a higher concentration range in the SS concentration.

For example, the SS concentration in the separated water obtained in the solid-liquid separation step in the method of treating wastewater of the invention is preferably from 1 to 5000 mg/L, more preferably from 10 to 3000 mg/L, and still more preferably from 10 to 1000 mg/L with respect to the total amount of the separated water.

The "colloid value" means the amount of negative charge contained in the supernatant water of wastewater or the separated water. In addition, the "supernatant water of wastewater" means a liquid phase obtained by subjecting wastewater to centrifugation at 3000 rpm for 5 minutes for solid-liquid separation. The value of the colloid value means a value that is specifically measured by the following procedure.

(1) In a 200 mL tall beaker, 10 mL of the supernatant water of wastewater or the separated water is put, and 90 mL of pure water is added thereto.
(2) Thereto, 2 mL of a 1/200 N solution of methyl glycol chitosan is added, and the mixture is stirred.
(3) As an indicator, 1 to 2 drops of Toluidine Blue is added to the mixture.
(4) While stirring at 500 rpm, titration is conducted with a 1/400 N aqueous solution of potassium polyvinyl sulfate, and the titre X (mL) at which the color of the liquid changes from blue to pink is measured.
(5) In the same manner, only 100 mL of pure water is titrated by the operations of (2) and (3), and the blank titre Y (mL) is measured.
(6) The colloid value (meq/L) is determined by the following formula (B).

$$\text{Colloid value (meq/L)} = (\text{titre X} - \text{titre Y})/10 \times 1/400 \times 1000 \cdots \text{(B)}$$

The colloid value in the separated water means the amount of negative charge contained in the separated water and is an indicator of the content of unreacted polymer flocculant remaining in the separated water. The colloid value in the separated water is preferably -2.00 meq/L or more and more preferably -0.50 meq/L or more. In addition, the colloid value is preferably 0.50 meq/L or less and more preferably 0.10 meq/L or less. When the colloid value is within the above range, it is possible to form favorable aggregate flocs in the flocculation treatment of wastewater, particularly organic wastewater and to efficiently conduct solid-liquid separation of the aggregate flocs. In addition, when the colloid value is within the above range, it is possible to purify the separated water obtained without adversely affecting the microbial and bacterial flora and aquatic plants in the constructed wetland. Furthermore, it is possible to efficiently purify the separated water since the separated water favorably passes through the interior of the filter bed of the constructed wetland.

For example, the colloid value in the separated water is preferably -2.00 to 0.50 meq/L and more preferably -0.50 to 0.10 meq/L.

The "CST" means the time taken until the moisture is sucked by the capillary attraction phenomenon, enlarged in the circumferential direction, and passes through between two points of a concentric circle when a predetermined amount of the supernatant water of wastewater or the separated water is dropped on a specific paper filter, it serves as an indicator of the amount of viscous substances contained in the supernatant water of wastewater or the separated

water, and it can also be utilized as an indicator of the content of unreacted polymer flocculant remaining in the separated water. The value of CST specifically means a value measured by the procedure described in "Sewerage Testing Act 2012, First Volume, Part 5 Sludge and Gas Test, Chapter 1 General Sludge Test, Section 15 Dehydration Property Test 3. CST Test". The CST of the separated water is preferably 5 seconds or longer and more preferably 10 seconds or longer. The CST is preferably 200 seconds or shorter and more preferably 50 seconds or shorter. When CST is within the above range, it is possible to form favorable aggregate flocs in the flocculation treatment of wastewater, particularly organic wastewater and to efficiently conduct solid-liquid separation of the aggregate flocs. In addition, when the CST is within the above range, it is possible to purify the separated water obtained without adversely affecting the microbial and bacterial flora and aquatic plants in the constructed wetland. Furthermore, it is possible to efficiently purify the separated water since the separated water favorably passes through the interior of the filter bed of the constructed wetland.

For example, the CST of the separated water is preferably from 5 to 200 seconds, more preferably from 10 to 200 seconds, and still more preferably from 10 to 50 seconds.

The method of conducting solid-liquid separation of the aggregate flocs is not particularly limited, but examples thereof may include a method such as flocculating setting, flotation separation, centrifugal separation, or filtration, and it is preferable to conduct the solid-liquid separation by flocculating setting or flotation separation. The time required for flocculating setting or flotation separation depends on the kind and amount of wastewater to be treated, but it is preferably 1 minute or longer and more preferably 3 minutes or longer. In addition, the time is preferably 60 minutes or shorter, more preferably 30 minutes or shorter, and still more preferably 10 minutes or shorter. In addition, the aggregate flocs may be dehydrated by solid-liquid separation using a dehydrating apparatus. In this case, examples of the dehydrating apparatus to be used for dehydration may include a press dehydrator, a centrifugal dehydrator, a screw press dehydrator, a multiple disc dehydrator, a rotary press filter, and a vacuum dehydrator.

For example, the time required for flocculating setting or flotation separation is preferably from 1 to 60 minutes, more preferably from 3 to 30 minutes, and still more preferably from 3 to 10 minutes.

<Purification Step>

This step is a step of purifying the separated water obtained in the previous step by using a constructed wetland.

(Constructed Wetland)

The separated water obtained through the aggregate floc forming step and the subsequent solid-liquid separation step in the method of treating wastewater of the invention is purified by using a constructed wetland. The "purification" using a constructed wetland means that separated water is allowed to flow into a constructed wetland and at least any one of BOD, COD, total nitrogen, or total phosphorus in the separated water is decreased. In particular, it is preferable to decrease at least any one of BOD, COD, total nitrogen, or total phosphorus in the separated water by allowing the separated water to flow through the constructed wetland. The COD (Mn) in the treated water at the outlet of the final wetland located at the most downstream side among the constructed wetlands to be used in the method of treating wastewater of the invention is preferably as small as possible, and for example, it is 1 mg/L or more with respect to the total amount of treated water, and it may be 10 mg/L or more. In addition, the COD is preferably 1000 mg/L or less and more preferably 500 mg/L or less. When the COD is within the above range, it is possible to more efficiently discharge the treated water to the river without adversely affecting the environment as the COD (Mn) is lower. For example, the COD (Mn) in the treated water at the outlet of the final wetland located at the most downstream side among the constructed wetlands to be used in the method of treating wastewater of the invention is preferably from 1 to 1000 mg/L and more preferably from 10 to 500 mg/L.

The value (COD (Mn) in wastewater/COD (Mn) at outlet of final wetland) obtained by dividing the value of COD (Mn) by the value of COD (Mn) in the treated water at the outlet of the final wetland in the wastewater in the method of treating wastewater of the invention is preferably 8 or more and more preferably 10 or more. The value is preferably 10000 or less and more preferably 5000 or less. When the value is within the above range, it is possible to more efficiently discharge the treated water to the river without adversely affecting the environment as the value of COD (Mn) in wastewater/COD (Mn) at outlet of final wetland is higher. For example, the value (COD (Mn) in wastewater/COD (Mn) at outlet of final wetland) obtained by dividing the value of COD (Mn) in the wastewater by the value of COD (Mn) in the treated water at the outlet of the final wetland in the method of treating wastewater of the invention is preferably from 8 to 10000 and more preferably from 10 to 5000.

The constructed wetland to be used in the method of treating wastewater of the invention preferably includes at least either of a vertical flow wetland or a horizontal flow wetland, and it is more preferable that a vertical flow wetland and a horizontal flow wetland are installed in combination and used. The conditions such as installation order of the respective wetlands, the number of installed stages, the area of wetland, and the volume of wetland are not particularly limited and can be appropriately selected and used in consideration of the properties and generated amount of separated

water and the target water quality of treated water. In addition, the conditions such as the size, material, and filling amount of the filter bed to be filled in the wetland are also not particularly limited and can be appropriately selected and used in consideration of the properties and generated amount of separated water and the target water quality of treated water. The kinds of aquatic plants are not particularly limited, but examples thereof may include Phragmites australist, Carex thunbergi, and Carex dispalata. Among these, Phragmites australist and Carex dispalata are preferable, and Carex dispalata is more preferable. It is possible to favorably decrease BOD and COD in the separated water when the aquatic plant is Carex dispalata. In addition, Carex dispalata is a perennial plant and form a stable plant community, and thus the load of wetland maintenance and management is saved, and a function of forming a favorable landscape can be obtained. In addition, the conditions such as the quantity of aquatic plants are not particularly limited and can be appropriately selected and used in consideration of the properties and generated amount of separated water and the target water quality of treated water.

EXAMPLES

Hereinafter, the invention will be described in detail with reference to Examples and Comparative Examples, but the invention is not limited by the following description unless it goes beyond the gist thereof. Incidentally, the term "%" in Examples and Comparative Examples denote "% by mass" unless otherwise specified. The reduced viscosity of the respective polymers obtained in the following Production Examples was measured as follows. For the measurement, a powdery polymer was used.

[Measurement of Reduced Viscosity]

The reduced viscosity of a polymer solution of 0.1 g/dL in a 1 mol/L sodium chloride aqueous solution was measured by using an Ostwald type viscometer at 25°C.

The raw materials used in Examples and Comparative Examples are presented below.

[Monomer]

(i) Cationic Monomer:

(a) N,N-dimethylaminoethyl acrylate methyl chloride quaternary salt (hereinafter referred to as "DME") manufactured by OSAKA ORGANIC CHEMICAL INDUSTRY LTD., aqueous solution at 80% by mass
(b) N,N-dimethylaminoethyl methacrylate methyl chloride quaternary salt (hereinafter referred to as "DMC") manufactured by OSAKA ORGANIC CHEMICAL INDUSTRY LTD., aqueous solution at 80% by mass

(ii) Anionic Monomer:

(a) Acrylic acid (hereinafter referred to as "AA") manufactured by Mitsubishi Chemical Corporation, aqueous solution at 50% by mass

(iii) Nonionic Monomer:

(a) Acrylamide (hereinafter referred to as "AAM") manufactured by Mitsubishi Rayon Co., Ltd., aqueous solution at 50% by mass
(b) Acrylonitrile (hereinafter referred to as "AN") manufactured by Mitsubishi Rayon Co., Ltd., purity of 99% by mass
(c) N-vinylformamide (hereinafter referred to as "NVF") manufactured by Mitsubishi Rayon Co., Ltd., aqueous solution having purity of 91% by mass

[Initiator]

(i) 2-Hydroxy-2-methyl-1-phenylpropane-1-one (DAROCUR (registered trademark) 1173) (hereinafter referred to as "D-1173") manufactured by Ciba

(ii) 2,2'-Azobis(2-amidinopropane)dihydrochloride (V-50) (hereinafter referred to as "V-50") manufactured by Wako Pure Chemical Industries, Ltd.

[Chain Transfer Agent]

Sodium hypophosphite (hereinafter referred to as "HPA") manufactured by Wako Pure Chemical Industries, Ltd.

[Synthesis of Amidine-Based Cationic Polymer (A)]

(Production Example 1)

In a four-necked flask which was equipped with a stirrer, a nitrogen introducing tube, and a cooling tube and had an internal volume of 50 mL, 6 g of a mixture of AN and NVF (molar ratio = 55: 45) and 34 g of distilled water were put. While stirring in a nitrogen gas, the temperature of the mixture was raised to 60°C, 0.12 g of V-50 was added into the flask, and the mixture was further retained at 60°C for 3 hours, thereby obtaining a suspension in which a polymer was precipitated in water. To the suspension, 20 g of distilled water was added, concentrated hydrochloric acid was added into the flask by one equivalent with respect to the formyl group of the polymer, and the mixture was retained at 100°C for 4 hours, thereby obtaining a yellow highly viscous liquid. This was added to a large amount of acetone to precipitate the polymer, the polymer gel thus obtained was chopped, dried at 60°C for 24 hours, and pulverized, thereby obtaining an amidine-based cationic polymer (A) (polymer A-1).

The polymer A-1 was dissolved in heavy water, and $^{13}C$-NMR spectrum was measured by using an NMR spectrometer (manufactured by JEOL Ltd., 270 MHz). The composition of each constitutional unit was calculated from the integral value of the peak corresponding to each repeating unit in the $^{13}C$-NMR spectrum. The contents of the constitutional units of the general formulas (1) and (2) were not distinguished from each other but were determined as the total amount. The results are presented in Table 1.

[Table 1]

| | Constitutional unit (*) | Composition [% by mole] | Reduced viscosity [ηSp/C] | |
|---|---|---|---|---|
| Production Example 1 Polymer A-1 | Amidine | 52.0 | 4.5 | Denatured product of polymer composed of AN/NVF = 55/45% by mole by hydrochloric acid |
| | NVF | 1.6 | | |
| | AN | 22.4 | | |
| | VAM | 24.0 | | |
| (*) Amidine: amidine hydrochloride constitutional unit, NVF: N-vinylformamide constitutional unit, AN: acrylonitrile constitutional unit, and VAM: vinylamine hydrochloride constitutional unit | | | | |

[Synthesis of Amphoteric Polymer (B)]

(Production Example 2)

In a brown heat-resistant bottle having an internal volume of 2000 mL, 632.9 g of DME, 100.0 g of AA, and 900.0 g of AAM were put, and 3.0 g of HPA and distilled water were added thereto, thereby preparing an aqueous monomer solution (DME: AA: AAM = 26.9: 7.2: 65.9 (% by mole), monomer concentration: 50%) having a total mass of 2000 g. Furthermore, D-1173 was added to the aqueous monomer solution so as to be 150 ppm with respect to the total mass of the aqueous monomer solution, and the temperature of the aqueous monomer solution was adjusted to 20°C while blowing nitrogen gas thereinto for 30 minutes.

Thereafter, the aqueous monomer solution was transferred to a stainless reaction container and irradiated with light at an irradiation intensity of 5 $W/m^2$ from the top of the container by using a chemical lamp until the surface temperature reached 40°C while spraying water at 16°C from the bottom of the container. After the surface temperature reached 40°C, the aqueous monomer solution was irradiated with light at an irradiation intensity of 0.3 $W/m^2$ for 30 minutes. Furthermore, in order to decrease the residual amount of monomer, the aqueous monomer solution was irradiated with light at an irradiation intensity of 50 $W/m^2$ for 10 minutes. In this manner, a polymer in the form of a

hydrogel was obtained. The polymer in the form of a hydrogel thus obtained was taken out from the container, crushed by using a small meat chopper, and then dried at a temperature of 60°C for 16 hours. Thereafter, the dried polymer was pulverized by using a Wheelie type pulverizer, thereby obtaining an amphoteric polymer (B) (polymer B-1).

(Production Example 3 and Production Example 4)

Amphoteric polymers (B) (polymer B-2 and polymer B-3, respectively) were obtained by conducting the same operation as in Production Example 2 except that the amounts of the respective monomers and HPA were adjusted and the proportions thereof were changed to those presented in Table 2 in Production Example 2.

[Synthesis of Cationic Polymer (C)]

(Production Example 5 to Production Example 9)

Cationic polymers (C) (polymer C-1 to polymer C-5, respectively) were obtained by conducting the same operation as in Production Example 2 except that the amounts of the respective monomers and HPA were adjusted and the proportions thereof were changed to those presented in Table 2 in Production Example 2.

[Table 2]

| | Polymer | Proportion of constitutional unit derived from each monomer [% by mole] | | | | HPA [ppm] | Reduced viscosity [ηsp/C] |
|---|---|---|---|---|---|---|---|
| | | AAM | DME | DMC | AA | | |
| Production Example 2 | B-1 | 65.9 | 26.9 | 0.0 | 7.2 | 125 | 3.5 |
| Production Example 3 | B-2 | 59.1 | 16.3 | 10.0 | 14.6 | 120 | 7.2 |
| Production Example 4 | B-3 | 65.9 | 26.9 | 0.0 | 7.2 | 25 | 11.5 |
| Production Example 5 | C-1 | 80.0 | 20.0 | 0.0 | 0.0 | 30 | 15.0 |
| Production Example 6 | C-2 | 60.0 | 40.0 | 0.0 | 0.0 | 65 | 9.5 |
| Production Example 7 | C-3 | 40.0 | 60.0 | 0.0 | 0.0 | 40 | 12.0 |
| Production Example 8 | C-4 | 12.6 | 78.8 | 8.6 | 0.0 | 40 | 6.8 |
| Production Example 9 | C-5 | 0.0 | 0.0 | 100.0 | 0.0 | 0 | 8.6 |

[Measurement of SS Concentration in Wastewater and Separated Water]

The SS concentrations in the wastewater and the separated water were measured by the SS concentration measuring method described above.

[Measurement of BOD in Wastewater]

The BOD in the wastewater was measured by the BOD measuring method described above.

[Measurement of COD in Wastewater, Separated Water, and Treated Water]

The COD in each of the wastewater, the separated water, and the treated water was measured by the COD (Mn) measuring method described above. Incidentally, the measurement result for COD in the separated water was used as an alternative value representing BOD in the separated water.

[Measurement of Total Phosphorus in Wastewater, Separated Water, and Treated Water]

The total phosphorus in each of the wastewater, the separated water, and the treated water was measured by the total phosphorus measuring method described above.

[Measurement of VTS in Wastewater]

The VTS in the wastewater was measured by the VTS measuring method described above.

[Measurement of Colloid Value in Supernatant Water of Wastewater and Separated Water]

The colloid values in the supernatant water of the wastewater and the separated water were measured by the colloid value measuring method described above.

[Measurement of CST of Supernatant Water of Wastewater and Separated Water]

The colloid value of the supernatant water of the wastewater and the separated water were measured by the CST measuring method described above.

(Examples 1 to 10)

[Wastewater]

As the wastewater, organic wastewater which was generated from a disposing facility of the dairy industry and had the following properties was used. In other words, organic wastewater having a pH of the wastewater of 7.81, a SS concentration of 65000 mg/L, VTS of 52.8%/solids, a colloid value in the supernatant water of -6.50 meq/L, CST of supernatant water of 4180 seconds, BOD of 25000 mg/L, COD of 24000 mg/L, and a total phosphorus of 860 mg/L, which were measured by the analysis methods described in the JIS standard.

[Flocculation Test]

In a 1000 L open tank, 600 L of the organic wastewater was collected. Subsequently, an aqueous solution of polymer flocculant was prepared by dissolving the polymer flocculant presented in Table 1 and Table 2 in water so as to be 0.3%, this was added to the organic wastewater so as to have the concentration presented in Table 4, and the mixture was then stirred and mixed by using a medium speed stirrer under the stirring conditions of a stirring speed of 300 rpm and a stirring time of 60 seconds to form aggregate flocs. Thereafter, the organic wastewater was separated into aggregate flocs and separated water by precipitating the aggregate flocs for 5 minutes for solid-liquid separation. The evaluation results to be described later are presented in Table 4.

(Comparative Example 1)

The aggregate flocs were formed and the organic wastewater was separated into aggregate flocs and separated water in the same manner as in Example 1 except that the polymer flocculant used was changed as presented in Table 4. The evaluation results to be described later are presented in Table 4.

[Evaluation Method]

[Particle Size of Aggregate Floc, Filterability, and SS Concentration, CST, Colloid Value, COD, and Total Phosphorus in Separated Water]

In each Example and Comparative Example, stirring was then stopped after aggregate flocs were formed and the particle size of the aggregate flocs was visually measured. Thereafter, 300 ml of the wastewater having aggregate flocs formed was collected in a 500 ml beaker and transferred to a Nutsche which had previously been covered with a filter cloth to measure the filterability (amount of filtered and separated water for 60 seconds). In addition, separated water was collected by solid-liquid separation in a 1000 L open tank, and the SS concentration, CST, colloid value, COD, and total phosphorus in the separated water were measured.

[Effect of Purifying Separated Water by Constructed Wetland]

In Examples 1 to 10 and Comparative Example 1, separated water was collected by solid-liquid separation in a 1000 L open tank, the separated water was allowed to flow into a constructed wetland as presented in Table 3 and purified, and treated water was obtained. Thereafter, the treated water was collected and subjected to the measurement of COD and total phosphorus. The measurement results for COD and total phosphorus in the treated water are presented in Table 4.

[Table 3]

<table>
<tr><td>Constructed wetland</td><td>First stage</td><td>Second stage</td><td>Third stage</td><td>Fourth stage</td><td>Fifth stage</td><td>Entire facility</td></tr>
<tr><td>Type of wetland</td><td>Vertical flow</td><td>Vertical flow</td><td>Horizontal flow</td><td>Vertical flow</td><td>-</td><td>-</td></tr>
<tr><td>Area of wetland [m$^2$]</td><td>22.5</td><td>22.5</td><td>40.0</td><td>22.5</td><td>-</td><td>107.5</td></tr>
<tr><td>Material of filter bed (*1)</td><td colspan="2">Pumice stone A<br>Pumice stone B<br>Gravel</td><td>Pumice stone A<br>Pumice stone B<br>Andosol</td><td>Pumice stone A<br>Pumice stone B<br>Gravel</td><td>-</td><td>-</td></tr>
<tr><td>Aquatic plant</td><td colspan="5">Carex dispalata</td><td>-</td></tr>
<tr><td colspan="7">*1: Particle size of pumice stone A is from 20 to 40 mm, particle size of pumice stone B is from 5 to 20 mm, particle size of gravel is from 0.2 to 2 mm, and particle size of andosol is from 0.2 to 2 mm.</td></tr>
</table>

[Table 4]

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| Polymer flocculant | Polymer A-1 | Polymer A-1 | Polymer B-1 | Polymer B-1 | Polymer B-2 | Polymer B-3 | Polymer C-1 | Polymer C-3 | Polymer C-5 | Polymer C-5 | Not added |
| Amount added [ppm] | 1000 | 1500 | 1000 | 1500 | 1000 | 1000 | 1000 | 1000 | 1000 | 1500 | - |
| Particle size of aggregate floc [mm] | 1.5 | 4 | 4 | 2 | 3 | 3 | 1.5 | 2.5 | 3 | 1.5 | - |
| Filterability [mL/60 sec] | 94 | 170 | 130 | 124 | 116 | 98 | 74 | 100 | 120 | 54 | - |
| SS concentration in separated water [mg/L] | 450 | 180 | 420 | 460 | 460 | 420 | 208 | 470 | 380 | 890 | 65000(*3) |
| CST of separated water [sec] | 78 | 15 | 89 | 97 | 104 | 112 | 78 | 86 | 88 | 186 | 4180 |
| Colloid value in separated water [meq/L] | -1.62 | 0.03 | -1.40 | -1.22 | -1.62 | -1.92 | -0.56 | -0.80 | -1.80 | 0.20 | -6.50 |
| COD in separated water (Mn) [mg/L] Inlet of wetland | 1700 | 660 | 1620 | 1500 | 1700 | 1900 | 1300 | 1650 | 1800 | 2400 | 24000(*3) |
| COD in treated water (Mn) [mg/L] Outlet of final wetland | 440 | 114 | 440 | 436 | 464 | 482 | 470 | 470 | 464 | 490 | Impossible to conduct purification treatment |
| COD in wastewater (Mn)/COD at outlet of final wetland (Mn) | 54.4 | 210.5 | 54.4 | 55.0 | 51.7 | 49.8 | 51.1 | 51.1 | 51.7 | 49.0 | - |
| Total phosphorus in separated water [mg/L] Inlet of wetland | 17.0 | 8.2 | 30.3 | 27.5 | 32.1 | 32.6 | 28.2 | 29.1 | 28.4 | 25.6 | 860(*3) |

(continued)

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| Total phosphorus in treated water [mg/L] Outlet of final wetland | 0.6 | 0.4 | 2.1 | 2.4 | 2.6 | 2.3 | 1.6 | 1.4 | 1.3 | 1.2 | Impossible to conduct purification treatment |
| Number of stages of wetland required (*2) | 4 | 2 | 4 | 4 | 4 | 4 | 4 | 4 | 4 | 4 | - |

*2: This is the number of stages of wetland required to decrease COD in treated water to less than 500 mg/L, and "-" denotes that COD in treated water is 500 mg/L or more.
*3: Polymer flocculant is not added and flocculation treatment is not conducted.

As presented in Table 4, in Examples 1 to 10 in which the flocculation treatment was conducted by the method of treating wastewater of the invention, the SS concentration, COD, and total phosphorus in the separated water after the flocculation treatment were greatly decreased as compared to the wastewater used. Furthermore, the COD and total phosphorus in the treated water were further decreased by purifying the separated water by a constructed wetland, and high quality treated water was obtained. In addition, in Examples 1 to 10 in which the colloid value in the separated water was -2.00 to 0.50 meq/L, the COD in the treated water was less than 500 mg/L.

As presented in Table 4, Comparative Example 1 is the results in a case in which the wastewater which was not subjected to the flocculation treatment by the method of treating wastewater of the invention was purified by a constructed wetland, the SS concentration, COD, and total phosphorus in the separated water were high, the filter bed of the constructed wetland was clogged, and it was impossible to conduct the purification treatment by the constructed wetland.

(Examples 11 to 14 and Comparative Example 2)

[Organic Wastewater Used]

As the wastewater, organic wastewater which was generated from a disposing facility of the swine industry and had the following properties was used. In other words, organic wastewater having a pH of the wastewater of 6.66, a SS concentration of 16500 mg/L, VTS of 76.0%/solids, a colloid value in the supernatant water of 1.80 meq/L, CST of supernatant water of 1153 seconds, BOD of 18300 mg/L, COD of 7240 mg/L, and a total phosphorus of 2420 mg/L, which were measured by the analysis methods described in the JIS standard.

[Flocculation Test]

The same flocculation test as in Example 1 was conducted except that the polymer flocculant used in the test was changed as presented in Table 6. The evaluation results in Examples 11 to 14 and Comparative Example 2 are presented in Table 6.

[Effect of Purifying Separated Water by Constructed Wetland]

In Examples 11 to 14 and Comparative Example 2, separated water was collected by solid-liquid separation in a 1000 L open tank, the separated water was allowed to flow into a constructed wetland as presented in Table 5 and purified, and treated water was obtained. Thereafter, the treated water was collected and subjected to the measurement of COD and total phosphorus. The measurement results for COD and total phosphorus in the treated water are presented in Table 6.

[Table 5]

| Constructed wetland | First stage | Second stage | Third stage | Fourth stage | Fifth stage | Entire facility |
|---|---|---|---|---|---|---|
| Type of wetland | Vertical flow | Vertical flow | Vertical flow | Horizontal flow | Vertical flow | |
| Area of wetland [$m^2$] | 22.5 | 22.5 | 22.5 | 40.0 | 22.5 | 130.0 |
| Material of filter bed (*4) | Pumice stone A<br>Pumice stone B<br>Gravel | | | Pumice stone A<br>Pumice stone B<br>Andosol | Pumice stone A<br>Pumice stone B<br>Gravel | - |
| Aquatic plant | Carex dispalata | | | | | - |
| *4: Particle size of pumice stone A is from 20 to 40 mm, particle size of pumice stone B is from 5 to 20 mm, particle size of gravel is from 0.2 to 2 mm, and particle size of andosol is from 0.2 to 2 mm. | | | | | | |

[Table 6]

| | Example 11 | Example 12 | Example 13 | Example 14 | Comparative Example 2 |
|---|---|---|---|---|---|
| Polymer flocculant | Polymer A-1 | Polymer A-1 | Polymer C-5 | Polymer C-5 | Not added |
| Amount added [ppm] | 600 | 1200 | 600 | 1200 | - |
| Particle size of aggregate floc [mm] | 2 | 4 | 2.5 | 2 | - |
| Filterability [mL/60 sec] | 120 | 160 | 118 | 108 | - |
| SS concentration in separated water [mg/L] | 340 | 226 | 380 | 330 | 16500(*6) |
| CST of separated water [sec] | 56 | 11 | 79 | 68 | 1153 |
| Colloid value in separated water [meq/L] | -0.60 | 0.08 | 0.11 | 0.18 | -1.80 |
| COD in separated water (Mn) [mg/L] Inlet of wetland | 1320 | 880 | 1480 | 1560 | 7240(*6) |
| COD in treated water (Mn) [mg/L] Outlet of final wetland | 480 | 180 | 470 | 490 | Impossible to conduct purification treatment |
| COD in wastewater (Mn) /COD at outlet of final wetland (Mn) | 15.1 | 40.2 | 15.4 | 14.8 | - |
| Total phosphorus in separated water [mg/L] Inlet of wetland | 180 | 120 | 330 | 310 | 2420(*6) |
| Total phosphorus in treated water [mg/L] Outlet of final wetland | 3.2 | 1.1 | 7.7 | 7.5 | Impossible to conduct purification treatment |
| Number of stages of wetland required (*5) | 5 | 3 | 5 | 5 | - |

*5: This is the number of stages of wetland required to decrease COD in treated water to less than 500 mg/L, and "-" denotes that COD in treated water is 500 mg/L or more.
*6: Polymer flocculant is not added and flocculation treatment is not conducted.

As presented in Table 6, in Examples 11 to 14 in which the flocculation treatment was conducted by the method of treating wastewater of the invention, the SS concentration, COD, and total phosphorus in the separated water after the flocculation treatment were greatly decreased as compared to the wastewater used. Furthermore, the COD and total phosphorus in the treated water were further decreased by purifying the separated water by a constructed wetland, and high quality treated water was obtained. In addition, in Examples 11 to 14 in which the colloid value in the separated water was -2.00 to 0.50 meq/L, the COD in the treated water was less than 500 mg/L.

As presented in Table 6, Comparative Example 2 is the results in a case in which the wastewater which was not subjected to the flocculation treatment by the method of treating wastewater of the invention was purified by a constructed wetland, the SS concentration, COD, and total phosphorus in the separated water were high, the filter bed of the constructed wetland was clogged, and it was impossible to conduct the purification treatment by the constructed wetland.

(Examples 15 to 22 and Comparative Example 3)

[Organic Wastewater Used]

As the wastewater, organic wastewater which was generated from a disposing facility of the dairy industry and had the following properties was used. In other words, organic wastewater having a pH of the wastewater of 7.94, a SS concentration of 35800 mg/L, VTS of 66.3%/solids, a colloid value in the supernatant water of -12.30 meq/L, CST of supernatant water of 3120 seconds, BOD of 7480 mg/L, COD of 12000 mg/L, and a total phosphorus of 980 mg/L, which were measured by the analysis methods described in the JIS standard.

[Flocculation Test]

The same flocculation test as in Example 1 was conducted except that the polymer flocculant used in the test was changed as presented in Table 7. The evaluation results in Examples 15 to 22 and Comparative Example 3 are presented in Table 7.

[Effect of Purifying Separated Water by Constructed Wetland]

In Examples 15 to 22 and Comparative Example 3, separated water was collected by solid-liquid separation in a 1000 L open tank, the separated water was allowed to flow into a constructed wetland as presented in Table 3 and purified, and treated water was obtained. Thereafter, the treated water was collected and subjected to the measurement of COD and total phosphorus. The measurement results for COD and total phosphorus in the treated water are presented in Table 7.

[Table 7]

| | Example 15 | Example 16 | Example 17 | Example 18 | Example 19 | Example 20 | Example 21 | Example 22 | Comparative Example 3 |
|---|---|---|---|---|---|---|---|---|---|
| Polymer flocculant | Polymer A-1 | Polymer A-1 | Polymer A-1 | Polymer C-2 | Polymer C-2 | Polymer C-3 | Polymer C-4 | Polymer C-4 | Not added |
| Amount added [ppm] | 800 | 1200 | 1600 | 800 | 1200 | 800 | 800 | 1200 | - |
| Particle size of aggregate floc [mm] | 1 | 6 | 10 | 6 | 8 | 3 | 1 | 3 | - |
| Filterability [mL/60 sec] | 56 | 120 | 164 | 110 | 90 | 98 | 36 | 96 | - |
| SS concentration in separated water [mg/L] | 1130 | 420 | 150 | 960 | 860 | 930 | 1800 | 920 | 35800(*8) |
| CST of separated water [sec] | 68 | 22 | 11 | 36 | 216 | 116 | 212 | 238 | 3120 |
| Colloid value in separated water [meq/L] | -1.50 | -0.14 | 0.05 | -0.47 | 0.72 | 0.15 | -2.15 | 1.40 | -12.30 |
| COD in separated water (Mn) [mg/L] Inlet of wetland | 2100 | 930 | 780 | 1050 | 1180 | 1120 | 2350 | 1050 | 12000(*8) |
| COD in treated water (Mn) [mg/L] Outlet of final wetland | 380 | 120 | 46 | 180 | 680 | 420 | 580 | 520 | Impossible to conduct purification treatment |
| COD in wastewater (Mn)/COD at outlet of final wetland (Mn) | 31.6 | 100.0 | 260.9 | 66.7 | 17.6 | 28.6 | 20.7 | 23.1 | - |
| Total phosphorus in separated water [mg/L] Inlet of wetland | 20.2 | 14.5 | 7.7 | 23.2 | 28.2 | 27.3 | 31.6 | 30.7 | 980(*8) |
| Total phosphorus in treated water [mg/L] Outlet of final wetland | 2.2 | 0.6 | 0.1 | 1.7 | 9.2 | 3.6 | 9.7 | 9.2 | Impossible to conduct purification treatment |
| Number of stages of wetland required (*7) | 4 | 3 | 1 | 3 | - | 4 | - | - | - |

*7: This is the number of stages of wetland required to decrease COD in treated water to less than 500 mg/L, and "-" denotes that COD in treated water is 500 mg/L or more.
*8: Polymer flocculant is not added and flocculation treatment is not conducted.

As presented in Table 7, in Examples 15 to 22 in which the flocculation treatment was conducted by the method of treating wastewater of the invention, the SS concentration, COD, and total phosphorus in the separated water after the flocculation treatment were greatly decreased as compared to the wastewater used. Furthermore, the COD and total phosphorus in the treated water were further decreased by purifying the separated water by a constructed wetland, and high quality treated water was obtained. In addition, in Examples 15 to 18 and 20 in which the colloid value in the separated water was -2.00 to 0.50 meq/L, the COD in the treated water was less than 500 mg/L.

As presented in Table 7, Comparative Example 3 is the results in a case in which the wastewater which was not subjected to the flocculation treatment by the method of treating wastewater of the invention was purified by a constructed wetland, the SS concentration, COD, and total phosphorus in the separated water were high, the filter bed of the constructed wetland was clogged, and it was impossible to conduct the purification treatment by the constructed wetland.

(Examples 23 to 25 and Comparative Example 4)

[Organic Wastewater Used]

As the wastewater, organic wastewater which was generated from a disposing facility of the dairy industry and had the following properties was used. In other words, organic wastewater having a pH of the wastewater of 7.85, a SS concentration of 35000 mg/L, VTS of 66.0%/solids, a colloid value in the supernatant water of -12.40 meq/L, CST of supernatant water of 3020 seconds, BOD of 7200 mg/L, COD of 11000 mg/L, and a total phosphorus of 900 mg/L, which were measured by the analysis methods described in the JIS standard.

[Flocculation Test]

The same flocculation test as in Example 1 was conducted except that the polymer flocculant used in the test was changed as presented in Table 9. The evaluation results in Examples 23 to 25 and Comparative Example 4 are presented in Table 9.

[Effect of Purifying Separated Water by Constructed Wetland]

In Examples 23 to 25 and Comparative Example 4, separated water was collected by solid-liquid separation in a 1000 L open tank, the separated water was allowed to flow into a constructed wetland as presented in Table 8 and purified, and treated water was obtained. Thereafter, the treated water was collected and subjected to the measurement of COD and total phosphorus. The measurement results for COD and total phosphorus in the treated water are presented in Table 9.

[Table 8]

| Constructed wetland | First stage | Second stage | Third stage | Fourth stage | Fifth stage | Entire facility |
|---|---|---|---|---|---|---|
| Type of wetland | Vertical flow | Vertical flow | Vertical flow | Vertical flow | - | - |
| Area of wetland [$m^2$] | 22.5 | 22.5 | 22.5 | 22.5 | - | 90 |
| Material of filter bed (*9) | Pumice stone A<br>Pumice stone B<br>Gravel | | | | - | - |
| Aquatic plant | Carex dispalata | | | | | - |
| *9: Particle size of pumice stone A is from 20 to 40 mm, particle size of pumice stone B is from 5 to 20 mm, and particle size of gravel is from 0.2 to 2 mm. | | | | | | |

[Table 9]

| | Example 23 | Example 24 | Example 25 | Comparative Example 4 |
|---|---|---|---|---|
| Polymer flocculant | Polymer A-1 | Polymer A-1 | Polymer A-1 | Not added |

(continued)

| | Example 23 | Example 24 | Example 25 | Comparative Example 4 |
|---|---|---|---|---|
| Amount added [ppm] | 800 | 1200 | 1600 | - |
| Particle size of aggregate floc [mm] | 2 | 5 | 10 | - |
| Filterability [mL/60 sec] | 60 | 125 | 160 | - |
| SS concentration in separated water [mg/L] | 1100 | 430 | 150 | 35000(*11) |
| CST of separated water [sec] | 65 | 20 | 13 | 3020 |
| Colloid value in separated water [meq/L] | -1.50 | -0.14 | 0.05 | -12.40 |
| COD in separated water (Mn) [mg/L] Inlet of wetland | 2200 | 920 | 760 | 11000(*11) |
| COD in treated water (Mn) [mg/L] Outlet of final wetland | 390 | 130 | 43 | Impossible to conduct purification treatment |
| COD in wastewater (Mn)/COD at outlet of final wetland (Mn) | 28.2 | 84.6 | 255.8 | - |
| Total phosphorus in separated water [mg/L] Inlet of wetland | 20.0 | 14.0 | 7.3 | 900(*11) |
| Total phosphorus in treated water [mg/L] Outlet of final wetland | 2.3 | 0.5 | 0.2 | Impossible to conduct purification treatment |
| Number of stages of wetland required (*10) | 3 | 3 | 1 | - |
| *10: This is the number of stages of wetland required to decrease COD in treated water to less than 500 mg/L, and "-" denotes that COD in treated water is 500 mg/L or more.<br>*11: Polymer flocculant is not added and flocculation treatment is not conducted. | | | | |

As presented in Table 9, in Examples 23 to 25 in which the flocculation treatment was conducted by the method of treating wastewater of the invention, the SS concentration, COD, and total phosphorus in the separated water after the flocculation treatment were greatly decreased as compared to the wastewater used. Furthermore, the COD and total phosphorus in the treated water were further decreased by purifying the separated water by a constructed wetland, and high quality treated water was obtained. In addition, in Examples 23 to 25 in which the colloid value in the separated water was -2.00 to 0.50 meq/L, the COD in the treated water was less than 500 mg/L.

As presented in Table 9, Comparative Example 4 is the results in a case in which the wastewater which was not subjected to the flocculation treatment by the method of treating wastewater of the invention was purified by a constructed wetland, the SS concentration, COD, and total phosphorus in the separated water were high, the filter bed of the constructed wetland was clogged, and it was impossible to conduct the purification treatment by the constructed wetland.

INDUSTRIAL APPLICABILITY

According to the invention, in the purification treatment of wastewater, particularly organic wastewater by a constructed wetland, a method of treating wastewater is provided in which the load of purification treatment by the constructed wetland is decreased without adversely affecting the microbial and bacterial flora and aquatic plants in the wetland, BOD, COD, total nitrogen, and total phosphorus in treated water are greatly decreased, and high quality treated water is obtained by adding a polymer flocculant to organic wastewater and conducting the flocculation and separation treatment in advance before the organic wastewater is allowed to flow into the constructed wetland. In addition, according to the method of treating wastewater of the invention, it is possible to expand the application range of the purification treatment of wastewater, particularly organic wastewater containing target substances which increase the values of SS, BOD, COD, and total phosphorus at high contents by a constructed wetland and to greatly cut down the treatment cost by decreases in the number of stages and the area of the constructed wetland required.

## Claims

**1.** A method of treating wastewater, the method comprising:

an aggregate floc forming step of forming an aggregate floc by adding a polymer flocculant to wastewater;
a solid-liquid separation step of obtaining separated water by solid-liquid separation of the aggregate floc; and
a purification step of purifying the separated water by using a constructed wetland.

**2.** The method of treating wastewater according to claim 1, wherein suspended solids in wastewater to which a polymer flocculant is added in the aggregate floc forming step is from 6000 to 100000 mg/L with respect to a total amount of the wastewater.

**3.** The method of treating wastewater according to claim 1 or 2, wherein a content of total phosphorus in wastewater to which a polymer flocculant is added in the aggregate floc forming step is from 10 to 10000 mg/L with respect to a total amount of the wastewater.

**4.** The method of treating wastewater according to any one of claims 1 to 3, wherein the polymer flocculant includes one or more kinds of polymer flocculants selected from the group consisting of an amidine-based cationic polymer (A), an amphoteric polymer (B), and a non-amidine-based cationic polymer (C).

**5.** The method of treating wastewater according to claim 4, wherein the polymer flocculant includes an amidine-based cationic polymer (A).

**6.** The method of treating wastewater according to claim 5, wherein an amount of the polymer flocculant added to the wastewater is from 100 to 3000 ppm by mass with respect to a mass of the wastewater.

**7.** The method of treating wastewater according to claim 4, wherein the polymer flocculant includes an amphoteric polymer (B).

**8.** The method of treating wastewater according to claim 7, wherein an amount of the polymer flocculant added to the wastewater is from 100 to 2000 ppm by mass with respect to a mass of the wastewater.

**9.** The method of treating wastewater according to claim 4, wherein the polymer flocculant includes a non-amidine-based cationic polymer (C).

**10.** The method of treating wastewater according to claim 9, wherein an amount of the polymer flocculant added to the wastewater is from 100 to 2000 ppm by mass with respect to a mass of the wastewater.

**11.** The method of treating wastewater according to claim 5, wherein the amidine-based cationic polymer (A) is a polymer containing an amidine constitutional unit represented by either of a general formula (1) or a general formula (2):

[Chem. 1]

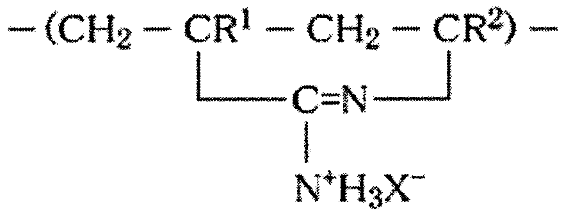

General formula (1)

(wherein, $R^1$ and $R^2$ are each independently a hydrogen atom or a methyl group and $X^-$ is an anion)

[Chem. 2]

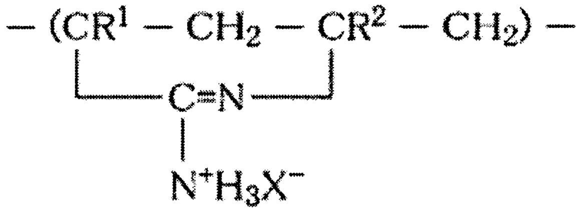

General formula (2)

(wherein, $R^1$ and $R^2$ are each independently a hydrogen atom or a methyl group and $X^-$ is an anion).

**12.** The method of treating wastewater according to claim 7, wherein the amphoteric polymer (B) is a polymer containing an anionic constitutional unit, a nonionic constitutional unit, and a cationic constitutional unit represented by a general formula (3):

[Chem. 3]

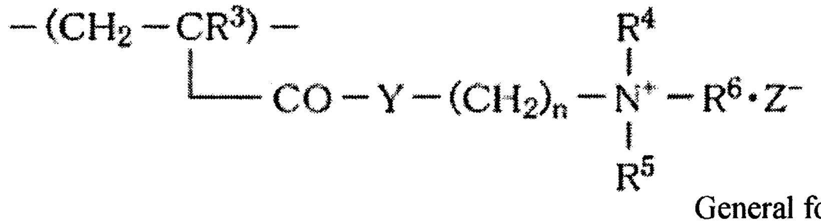

General formula (3)

(wherein, $R^3$ is a hydrogen atom or a methyl group, $R^4$ and $R^5$ are each independently a hydrogen atom or an alkyl group having from 1 to 4 carbon atoms, $R^6$ is an alkyl group having from 1 to 4 carbon atoms or a benzyl group, Y is an oxygen atom or NH, $Z^-$ is an anion, and n is an integer from to 3).

**13.** The method of treating wastewater according to claim 9, wherein the non-amidine-based cationic polymer (C) is a polymer containing a cationic constitutional unit represented by a general formula (4):

[Chem. 4]

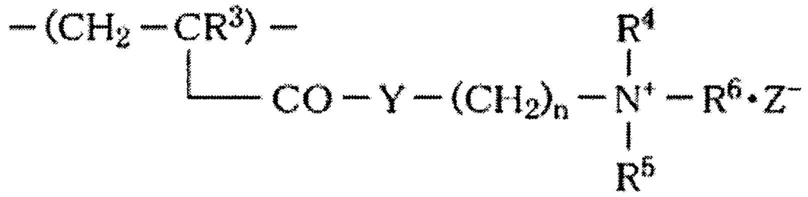

General formula (4)

(wherein, $R^3$ is a hydrogen atom or a methyl group, $R^4$ and $R^5$ are each independently a hydrogen atom or an alkyl group having from 1 to 4 carbon atoms, $R^6$ is an alkyl group having from 1 to 4 carbon atoms or a benzyl group, Y is an oxygen atom or NH, $Z^-$ is an anion, and n is an integer from 1 to 3).

**14.** The method of treating wastewater according to any one of claims 1 to 13, wherein a colloid value in the separated water is from -2.00 to 0.50 meq/L.

**15.** The method of treating wastewater according to any one of claims 1 to 14, wherein the constructed wetland includes

at least either of a vertical flow wetland or a horizontal flow wetland.

**16.** The method of treating wastewater according to any one of claims 1 to 15, wherein a value (COD (Mn) in wastewater/COD (Mn) at outlet of final wetland) obtained by dividing a value of COD (Mn) in the wastewater by a value of COD (Mn) in treated water at an outlet of a final wetland located at a most downstream side is from 8 to 10000.

## INTERNATIONAL SEARCH REPORT

International application No.
PCT/JP2016/065576

A. CLASSIFICATION OF SUBJECT MATTER
*C02F1/56*(2006.01)i, *B01D21/01*(2006.01)i, *C02F3/32*(2006.01)i

According to International Patent Classification (IPC) or to both national classification and IPC

B. FIELDS SEARCHED

Minimum documentation searched (classification system followed by classification symbols)
C02F1/56, B01D21/01, C02F3/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-103293 A (Kabushiki Kaisha Kankyo System Kenkyusho), 08 April 2003 (08.04.2003), claims; paragraphs [0002] to [0005], [0012], [0019] to [0022]; fig. 1 (Family: none) | 1-16 |
| Y | JP 2006-297229 A (Dia-Nitrix Co., Ltd.), 02 November 2006 (02.11.2006), claims; paragraphs [0011] to [0015], [0019] to [0022] (Family: none) | 1-16 |
| Y | JP 2008-168295 A (Kato Construction Co., Ltd.), 24 July 2008 (24.07.2008), claims; paragraphs [0001] to [0002] & JP 2004-209465 A | 15-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 August 2016 (02.08.16) | 16 August 2016 (16.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2016/065576

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-246372 A (Kurita Water Industries Ltd.), 16 October 2008 (16.10.2008), claims; paragraphs [0002], [0012] to [0013], [0016], [0028] (Family: none) | 1-16 |
| A | JP 4-131197 A (EBARA-Infilco Co., Ltd.), 01 May 1992 (01.05.1992), claims (Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015107637 A
- JP 2008068211 A
- JP 2010179248 A